(19) Europäisches Patentamt
European Patent Office
Office européen des brevets

(11) Veröffentlichungsnummer: **0 150 706**
**B1**

(12) **EUROPÄISCHE PATENTSCHRIFT**

(45) Veröffentlichungstag der Patentschrift: **03.05.89**

(51) Int. Cl.⁴: **C 08 F 2/38**, C 08 F 220/04, C 02 F 5/14, C 23 F 11/173

(21) Anmeldenummer: **85100019.0**

(22) Anmeldetag: **02.01.85**

# (54) Cotelomere Verbindungen.

(30) Priorität: **13.01.84 GB 8400848**

(43) Veröffentlichungstag der Anmeldung: **07.08.85 Patentblatt 85/32**

(45) Bekanntmachung des Hinweises auf die Patenterteilung: **03.05.89 Patentblatt 89/18**

(84) Benannte Vertragsstaaten: **BE CH DE FR GB IT LI NL SE**

(56) Entgegenhaltungen: **GB-A-1 458 235**

(73) Patentinhaber: **CIBA-GEIGY AG, Klybeckstrasse 141, CH-4002 Basel (CH)**

(72) Erfinder: **Richardson, Norman, 21, Grey Street, Middleton Manchester M24 3UF (GB)**
Erfinder: **Holt, Brian, Dr., 70 Moss Park Road, Stretford Manchester M32 9HQ (GB)**
Erfinder: **Cook, Barry, Dr., 11 Warwick Drive, Urmston Manchester M31 2AY (GB)**

(74) Vertreter: **Zumstein, Fritz, Dr. et al, Bräuhausstrasse 4, D-8000 München 2 (DE)**

EP 0 150 706 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue cotelomere Verbindungen, deren Herstellung, sowie deren Verwendung zur Behandlung von wässrigen Systemen, um die Korrosion von Metallen, die in Berührung mit diesem wässrigen System stehen, und/oder Kesselsteinablagerungen aus diesen wässrigen Systemen zu verhindern und/oder die Dispergierung von Partikeln in diesen wässrigen Systemen zu verbessern.

Die meisten natürlichen Wässer und wässrige Systeme im allgemeinen enthalten gelöste Metallsalze von Calcium, Magnesium, Barium und Strontium. Wird das Wasser oder das wässrige System erhitzt, können sich die gelösten Salze in unlösliche Salze umwandeln und als Kesselstein auf den Wärmetransferflächen, die in Berührung mit dem Wasser oder dem wässrigen System stehen, abgelagert werden. Wird das Wasser oder das wässrige System auch ohne Erhitzen konzentriert, können ebenfalls unlösliche Salze ausfallen.

Salzausfällungen und Kesselsteinablagerungen erweisen sich als störend und können erhöhte Unterhaltskosten zur guten Betriebsfähigkeit von wässrigen Systemen verursachen. Zu den durch Kesselsteinablagerungen hervorgerufenen Problemen gehören Beeinträchtigungen des Flüssigkeitsstroms, Erschwerung des Wärmeaustauschs, Verschleiss von Metallteilen, kürzere Lebensdauer von Anlagen, örtliches Auftreten von Korrosion, schlechte Wirksamkeit von Korrosionsinhibitoren und unvorhergesehene Stillegung von Anlagen. Diese Probleme können bei Brunnenschächten und Ölbohrlöchern, Wasserleitungen, thermischen Kraftwerken, Wasserentsalzungsanlagen, Anlagen zur Gegenstrom-Osomose unter Verwendung wässriger Systeme, Wärmetauscheranlagen und Anlagen zum Transport von Stoffen in wässrigem Medium (z.B. Flugasche, die bei der Verbrennung von Kohle zur Gewinnung von Elektrizität entsteht.)

Der Temperaturbereich in dem solche Anlagen betrieben werden ist gross; z.B. Umgebungstemperatur für Kühlwasser und erhöhte Temperaturen für thermische Kraftwerke.

Eine Möglichkeit, die Nachteile der Kesselsteinablagerung zu überwinden, beinhaltet den Ausbau der Anlage, damit die angereicherten Ablagerungen ausgeräumt werden können. Dieses Verfahren ist kostspielig und verhindert die erneute Kesselsteinbildung nicht. Eine andere Methode beinhaltet die Verwendung von Lösungen starker Basen zur Entfernung vorwiegend von Sulfatkesselsteinen. Es wurde berichtet, dass unter günstigen Bedingungen in Bezug auf Temperatur und Zeit die Behandlung mit Basen die Auflösung des Kesselsteins einleitet, der dann auf mechanische Weise entfernt werden kann. Ein solches Verfahren ist zeitraubend und die Entfernung des Kesselsteins nach der Behandlung oft schwierig.

Daher besteht in diesem Anwendungsbereich ein Bedürfnis nach einer Zusammensetzung, die dem Wasser oder wässrigen Systemen in sehr kleinen Mengen zugesetzt werden kann und die so einerseits die Menge an unlöslichen Salzen, welche in einem grossen Temperaturbereich ausgefällt werden, vermindert und anderseits die ausgefällten, unlöslichen Salze dispergiert.

Zusätzlich sollte im Falle einer Kesselsteinbildung dieser auf einfache Weise von Oberflächen mechanisch entfernt werden können.

Verschiedene Additive wurden als Zusätze zu Wasser oder wässrigen Systemen zu diesem Zweck vorgeschlagen, darunter gewisse Polyphosphate und Polycarbonsäuren.

Die Polyphosphate haben den Vorteil, dass sie einen weichen, brüchigen Kesselstein bilden, der leicht von Oberflächen entfernt werden kann, während die Verwendung von gewissen Polycarbonsäuren wie z.B. Polyacrylsäuren den Nachteil hat, dass diese einen harten, anhaftenden, eierschalenartigen Kesselstein ergeben.

Da jedoch, bei Verwendung von Wasserbehandlungs-Verfahren, die die Anwendung von Wärme beinhalten, die Temperaturen erhöht sind und die Polyphosphat-Additive bei hohen Temperaturen leicht hydrolysieren, was zur Ausfällung von unlöslichem Calcium-orthophosphat und andern Calcium-phosphaten führen kann, ist deren Nützlichkeite als Folge davon begrenzt.

In der britischen Patentschrift No. 1 458 235 wird ein sehr wirksames Verfahren beschrieben zur Verhinderung der Ausfällung von Kesselstein bildenden Calcium-, Magnesium-, Barium- und Strontium-Salzen aus wässrigen Systemen, in dem diesem eine telomere Verbindung der folgenden Formel zugesetzt wird:

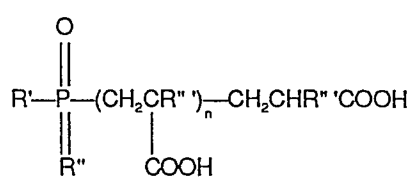

und deren Salze, worin R‴ Wasserstoff, Methyl oder Ethyl, R′ Wasserstoff, $C_1$-$C_{18}$-Alkyl, $C_5$-$C_{12}$-Cycloalkyl, Aryl, Aralkyl, einen Rest

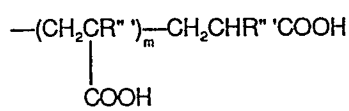

worin R‴ die vorbeschriebene Bedeutung hat und n + m eine ganze Zahl von höchstens 100 ist, oder R′ einen Rest -OX, worin X Wasserstoff oder $C_1$-$C_4$-Alkyl und R″ einen Rest -OX, mit X in der vorbeschriebenen Bedeutung, bedeuten.

Weiter gibt es zahlreiche Produktionsanlagen wie z.B. Industrie-Dampfkessel, Kühlwassersysteme, Gaswaschanlagen, Schlammanlagen, wie z.B. Kaolin-Schlammanlagen, wo es wichtig ist, die verschiedenen in Wässern solcher Anlagen vorkommenden Feststoffe in suspendiertem oder dispergiertem Zustand zu erhalten. Falls solche Feststoffe nicht mehr im Wasser suspendiert

sind, kann es zur Verstopfung der Anlage kommen z.B. in sogenannten «Once-through»-Kühlsystemen. Im Falle von reichlichem Wasserangebot in der Nähe von Industrieanlagen wird die Kühlung durch Leiten des Wassers durch Abhitzekessel vorgenommen, wobei das Wasser anschliessend zum Entnahmeort zurückgeleitet wird. Vom ökonomischen Standpunkt her ist jedoch ein konventionelles Filtrieren des Wassers nicht durchführbar, wegen der grossen Wassermengen, die bei diesem System benötigt werden. Deshalb findet die Bildung von Ablagerungen in der Anlage leicht statt und es ist nötig, den Betrieb periodisch wegen Reinigungsarbeiten einzustellen. Zudem führt die Korrosion der Anlage zur Ablagerung von Eisenoxiden und/oder Eisensalzen, welche, wenn sie nicht sorgfältig kontrolliert wird, zum Stillstand und mechanischen Versagen der Anlage führen.

Ein weiterer Problembereich ist die Ansammlung von Schlamm und Schmutz, die sich am Boden von Wassertanks und Ballasttanks von Schiffen ablagert und damit die Ökonomie des Unterhalts und des Betriebs des Schiffes beeinträchtigt.

Ein anderer mit der unerwünschten Ablagerung aus wässrigen Systemen auf Metalloberflächen verbundener Problemkreis ergibt sich während des Versiegelns von anodisch auf Aluminium aufgebrachten Oxidschichten. Bei solchem Versiegeln unter Verwendung von heissem oder kochendem Wasser werden nicht nur die Poren der Oxidschichten versiegelt, sondern es bildet sich auch dicker, samtartiger Überzug («Sealing-smut») über die ganze Oberfläche. Es besteht nun ein Bedarf nach einem verbesserten «Sealing-smut»-Inhibitor.

Es wurden nun cotelomere Verbindungen gefunden, die kesselsteininhibierende Wirkung, vergleichbar mit derjenigen der Telomeren aus GB 1 458 235, aufweisen und ausgezeichnete Dispergierungseigenschaften für Partikel sowie gute allgemeine korrosionsinhibierende Wirkung in wässrigen Systemen besitzen. Die neuen cotelomeren Verbindungen finden auch Verwendung als Versiegelungsschutzinhibitoren.

Die vorliegende Erfindung betrifft neue cotelomere Verbindungen der Formel I

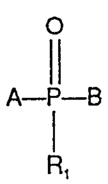

(I)

und deren Salze, worin A ein statistischer Polymerrest, enthaltend mindestens einen Rest der Formel II

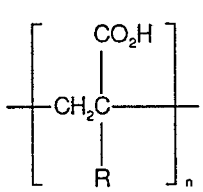

(II)

und mindestens einen vom Rest der Formel II verschiedenen Rest der Formel III

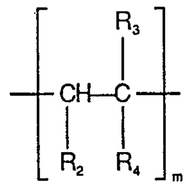

(III)

und B Wasserstoff oder ein Rest A ist; und worin m und n ganze Zahlen sind, mit der Summe von m und n eine ganze Zahl von 3-100 und das Verhältnis n:m im Bereich von 99:1 bis 1:99, so dass die resultierenden Telomere wasserlöslich sind und worin m und/oder n in einem Rest A gleich oder verschieden von m und/oder n in einem Rest B sein können; R ist Wasserstoff, Methyl oder Ethyl, $R_1$ ist ein Rest -OX, worin X Wasserstoff, ein Alkali- oder ein Erdalkalimetall, Ammonium oder ein Aminrest ist, $R_2$ ist Wasserstoff, Methyl oder ein Rest $-CO_2R_5$, worin $R_5$ Wasserstoff oder geradkettiges oder verzweigtes $C_1$-$C_8$-Alkyl ist, das gegebenenfalls durch eine Hydroxylgruppe substituiert sein kann, $R_3$ ist Wasserstoff, geradkettiges oder verzweigtes $C_1$-$C_4$-Alkyl, Hydroxymethyl oder ein Rest $-CO_2R_6$, worin $R_6$ Wasserstoff, ein Rest der Formel

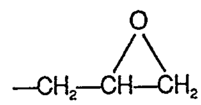

ein Rest der Formel $-[CH_2-CH(R_9)O]_zH$, worin $R_9$ Wasserstoff, Methyl oder Phenyl und z eine ganze Zahl von 1-20 ist, oder geradkettiges oder verzweigtes $C_1$-$C_8$-Alkyl ist, welches gegebenenfalls durch Hydroxy oder eine $SO_3M$-Gruppe, worin M Wasserstoff oder ein Alkali- oder Erdalkalimetallatom ist, substituiert sein kann, $R_4$ ist ein Rest $-CO_2R_6$, worin $R_6$ die vorbeschriebene Bedeutung hat, geradkettiges oder verzweigtes $C_1$-$C_8$-Alkyl, das gegebenenfalls durch eine oder zwei Carboxylgruppen substituiert sein kann, Phenyl, Acetyl, Hydroxymethyl, Acetomethyl, $-SO_3M$, $-CH_2SO_3M$ oder $-PO_3M_2$, worin M Wasserstoff, ein Alkali- oder Erdalkalimetallatom ist, ein Rest $-CONR_7R_8$, worin $R_7$ und $R_8$ gleich oder verschieden Wasserstoff, geradkettiges oder verzweigtes $C_1$-$C_8$-Alkyl, Hydroxymethyl oder ein Rest $-CH(OH)CO_2M$, $-C(CH_3)_2CH_2SO_3M$ oder $-C(CH_3)_2.CH_2PO_3M_2$ (mit M in der vorbeschriebenen Bedeutung) sind, oder ein Rest $-N(R_{10})COCH_3$, worin $R_{10}$ Wasserstoff oder geradkettiges oder verzweigtes $C_1$-$C_4$-Alkyl ist.

Salze der cotelomeren Verbindungen der Formel I sind Verbindungen, worin einige oder alle sauren Wasserstoffatome in den sauren Verbindungen der Formel I durch Alkalimetallionen, Ammoniumionen oder quaternäre Aminradikale ersetzt werden. Diese Salze haben ebenso gute Inhibitorwirksamkeit in Bezug auf die Ausfällung von unlöslichen Salzen aus wässerigen Lösungen.

Die Verbindungen der Formel I, Reaktionsprodukte enthaltend Verbindungen der Formel I und deren Salze sind wirksam in Bezug auf die Verhinderung der Kesselsteinbildung und der Salzausfällung aus wässrigen Lösungen. Die kesselsteinbildenden Salze leiten sich aus Calcium-, Magnesium-, Barium- oder Strontiumkationen und Sulfat-, Carbonat-, Hydroxid-, Phosphat- oder Silicatanionen her.

Die Verbindungen der Formel I, Reaktionsprodukte enthaltend Verbindungen der Formel I und deren Salze sind besonders wirksam in Bezug auf die Verhinderung der Ablagerung von Calciumsulfat-, Magnesiumhydroxid-, Calciumphosphat- und Calciumcarbonat-Kesselstein und die Dispergierung von Calciumphosphat-Schlamm.

Sind $R_3$ und $R_{10}$ $C_1$–$C_4$-Alkyl, so handelt es sich z.B. um Methyl, Ethyl, n-Propyl, Isopropyl und n-Butyl.

Sind $R_4$, $R_5$, $R_7$ und $R_8$ $C_1$–$C_8$-Alkyl, so handelt es sich z.B. um Methyl, Ethyl, n-Propyl, Isopropyl, n-Butyl, n-Pentyl, n-Hexyl und n-Octyl.

Sind $R_5$ oder $R_6$ Hydroxy-substituiertes $C_1$–$C_8$-Alkyl, so handelt es sich z.B. um Hydroxymethyl, 2-Hydroxyethyl, 2- oder 3-Hydroxypropyl, 2- oder 4-Hydroxybutyl, 2- oder 6-Hydroxyhexyl und 2- oder 8-Hydroxyoctyl.

Ist $R_4$ Carboxy-substituiertes $C_1$–$C_8$-Alkyl, so handelt es sich z.B. um Carboxymethyl, Carboxyethyl, Carboxypropyl oder 1,1-Dicarboxymethyl.

Sind X und/oder M Alkali-Metallatome, so handelt es sich bevorzugt um Natrium- oder Kalium-Atome; im Fall von X und/oder M als Erdalkali-Metallatome handelt es sich um Calcium-, Barium- und Strontium-Atome.

Ist X ein Amin-Rest, so handelt es sich z.B. um Ammonium,

$$-\overset{\oplus}{N}H(CH_3)_3,\ -\overset{\oplus}{N}H(C_2H_5)_3 \text{ oder } -\overset{\oplus}{N}H(CH_2CH_2-OH)_3.$$

Vorzugsweise ist B ein Rest A mit der vorstehend beschriebenen Bedeutung und $R_1$ vorzugsweise ein Rest $-OM$, worin M die vorstehend beschriebene Bedeutung hat.

Bevorzugte Verbindungen der Formel I sind die, worin B ein Rest A ist, worin R Wasserstoff ist, $R_2$ Wasserstoff oder ein Rest $-COOR_5$, worin $R_5$ Wasserstoff oder $C_1$–$C_8$-Alkyl ist, $R_3$ Wasserstoff oder $COOR_6$ ist, mit $R_6$ in der vorstehend beschriebenen Bedeutung, $R_4$ ein Rest $-COOR_6$ ist, worin $R_6$ Wasserstoff oder $C_1$–$C_4$-Alkyl ist, das gegebenenfalls durch eine Hydroxygruppe substituiert sein kann, oder $R_4$ $C_1$–$C_8$-Alkyl, das gegebenenfalls durch eine oder zwei Carboxylgruppen substituiert sein kann, Phenyl, Acetomethyl, $-SO_3M$ oder $-PO_3M_2$ (mit M in der vorstehend beschriebenen Bedeutung), $-CONR_7R_8$ (mit $R_7$ und $R_8$ in der vorstehend beschriebenen Bedeutung) oder $-N(R_{10})COCH_3$ (mit $R_{10}$ in der vorstehend beschriebenen Bedeutung) ist und, worin $R_1$ die vorstehend beschriebene Bedeutung hat und die Summe von m und n 3 bis 32 beträgt.

Bevorzugt ist das Verhältnis m:n im Bereich von 90:10 bis 10:90.

Beispiele der Basen, mit denen Verbindungen der Formel I umgesetzt werden können zu Teilsalzen oder Salzen, sind Natrium-, Kalium- und Ammonium-Hydroxide und -Carbonate. Gleichermassen können organische Basen verwendet werden, wie z.B. primäre, sekundäre und tertiäre Alkyl- und substituierte Alkylamine, worin die Gesamtzahl der C-Atome 12 nicht übersteigt wie z.B. Triethanolamin.

Die vorliegende Erfindung betrifft im weiteren ein Verfahren zur Herstellung der cotelomeren Verbindungen der Formel I enthaltend die Umsetzung von n Molen einer Säure der Formel IV

$$CH_2=CR-CO_2H \qquad (IV),$$

m Molen einer Verbindung der Formel V

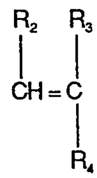

(V)

worin R, $R_2$, $R_3$, $R_4$, m und n die vorstehend beschriebenen Bedeutungen haben, mit einem Mol einer Verbindung der Formel VI

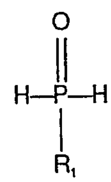

(VI)

mit $R_1$ in der vorstehend beschriebenen Bedeutung.

Beispiele von Co-monomeren der Formel V sind z.B. Acrylamid, N-Hydroxymethylacrylamid, N,N-Dimethylacrylamid, N-Vinyl-N-methyl-acetamid, N-Allylacetamid, N-Acrylamidoglycolsäure, Methacrylsäure, Methylmethacrylat, 2-Hydroxyethylmethacrylat, 2-Hydroxypropylmethacrylat, 2-Hydroxyethylacrylat, 2-Hydroxypropylacrylat, Maleinsäure, 2-Carboxyethylacrylat, 3-Buten-1, 2, 3-Tricarbonsäure, Dimethylmaleat, Diethylmaleat, Diethylfumarat, Itaconsäure, Dimethylitaconat, Vinylsulfonsäure, Allylsulfonsäure, 4-Styrolsulfonsäure, Na- oder K-Salz der 3-Sulfopropylacrylsäure, Acrylamidomethylpropan-2-sulfonsäure, Vinylphosphonsäure, Styrolphosphonsäure, Allylalcohol, Allylacetat, Vinylacetat, Styrol, $\alpha$-Methylstyrol, Hexen, Octen, N-Acrylamidopropansulfonsäure, Glycidylmethacrylat, Crotonsäure, Ethylcrotonat, Polyethylenglycolester und Polypropylenglycolester der Methacryl- und Acrylsäuren.

Andererseits kann ein Salz der Verbindung VI verwendet werden, worin die sauren Wasserstoffatome teilweise oder vollständig durch Kationen ersetzt sind, die sich von den vorstehend beschriebenen, salzbildenden Basen ableiten.

Die Reaktion wird, wie im US 2 957 931 beschrieben, in einem unter den Reaktionsbedingungen inerten Lösungsmittel und in Gegenwart eines Reaktionsauslösers durchgeführt. Geeignete Reaktionslösungsmittel sind z.B. Wasser, wässriges Ethanol oder Dioxan. Geeignete Reaktionsauslöser sind Verbindungen, die sich unter den Reaktionsbedingungen unter Bildung freier Radikale zersetzen. Beispiele für solche Verbindungen sind Bisazoisobutyronitril, organische Peroxide wie z.B. Benzoylperoxid, Methylethylketonperoxid, Di-tert.-butyl-peroxid und Monobutylhydroperoxid, sowie oxidierende Stoffe wie z.B. Wasserstoffperoxid, Natriumperborat und Natriumpersulfat.

Die Produkte dieses Verfahrens werden als Lösungen erhalten. Diese können bei vermindertem Druck teilweise oder vollständig eingedampft werden. Die rohen Reaktionsprodukte können als cotelomere Produkte in der erfindungsgemässen Anwendung eingesetzt werden. Jedoch können die Reaktionsprodukte auch gereinigt werden. Die Reinigung kann auf folgende Weise durchgeführt werden.

1. Eindampfen des Reaktionslösungsmittels, Lösen des Rückstandes in Wasser, Waschen der Lösung mit einem mit Wasser nichtmischbaren organischen Lösungsmittel wie z.B. Ether und Eindampfen der wässerigen Lösung.

2. Eindampfen des Reaktionslösungsmittels, Lösen des Rückstandes in Methanol und erneute Ausfällung durch Zugabe von Ether.

Falls die Reaktionsprodukte ohne weitere Reinigung verwendet werden, ist das Verhältnis der Reaktionskomponenten wichtig, weil sich die Aktivität der Produkte dementsprechend verändert.

Salze der Verbindungen der Formel I, worin die sauren Wasserstoffatome teilweise oder vollständig durch Kationen ersetzt sind, die sich von den vorstehend beschriebenen, salzbildenden Basen ableiten, können durch Mischen einer wässrigen oder alkoholischen Lösung der Verbindung der Formel I mit einer wässrigen oder alkoholischen Lösung enthaltend die benötigte Base im Überschuss, im stöchiometrischen Verhältnis oder im Unterschuss hergestellt werden. Das Lösungsmittel wird durch Eindampfen entfernt.

Die genauen Strukturen der durch dieses Verfahren hergestellten Produkte sind nicht vollständig aufgeklärt. NMR-spektroskopische Untersuchungen haben jedoch gezeigt, dass neben nicht umgesetzter Verbindung der Formel VI und polymeren Verbindungen aus einer Säure der Formel IV und Verbindungen der Formel V das Reaktionsprodukt aus dem vorstehend beschriebenen Verfahren noch eine Verbindung der Formel I wie vorstehend beschrieben enthält.

Die vorliegende Erfindung betrifft im weiteren ein Verfahren zur Behandlung eines teilweise oder ganz wässrigen Systems, das mit Metalloberflächen in Kontakt steht, zur Verhinderung der Kesselsteinablagerung auf den Metalloberflächen und/oder zur Verhinderung der Korrosion der Metalloberflächen und/oder besser Dispergierbarkeit von festen Partikeln im wässrigen System und/oder zur Verhinderung der Ablagerung von «Sealing-Smut» aus diesen wässrigen Systemen, das darin besteht, dass dem wässrigen System eine funktionell wirksame Menge einer cotelomeren Verbindung der Formel I, wie vorstehend beschrieben, oder eines Salzes davon zugesetzt wird.

In der Praxis ist die Menge an Verbindung der Formel I, die zur Behandlung der Metalloberfläche verwendet wird, z.B. durch Zugabe der Verbindung zu dem in Kontakt mit der Metalloberfläche stehenden wässrigen System, je nach Schutzfunktion verschieden, welche die Verbindung ausüben soll. Bei der Korrosionsschutzbehandlung, gegebenenfalls in Kombination mit der Behandlung zur Verhinderung der Kesselsteinbildung, liegt die geeignete Menge dieser dem wässrigen System zugesetzten Verbindung im Bereich von 0.1 bis 50000 ppm (oder 0.00001 bis 5 Gew.-%) bevorzugt von 1 bis 500 ppm (oder 0.0001 bis 0.05 Gew.-%) bezogen auf das wässrige System. Für blosse Anti-Kesselstein-Wirkung liegt die geeignete Menge dieser Verbindung der Formel I im Bereich von 1 bis 200 ppm, bevorzugt 1 bis 30 ppm, bezogen auf das wässrige System.

Zur Behandlung von meist relativ verdünnten wässrigen Dispersionen beträgt die geeignete Menge der Verbindung der Formel I, die als Dispergiermittel erfindungsgemäss eingesetzt wird, 1 bis 200 ppm, bevorzugt 2 bis 20 ppm. Jedoch können bei der Behandlung von wässrigem Schlamm sehr viel grössere Mengen der Verbindung der Formel I benötigt werden, z.B. 0.1 bis 5 Gew.-% bezogen auf die Gesamtfeststoffmenge, welche bis zu 70 Gew.-% des gesamten wässrigen Systems betragen kann.

Wird eine Verbindung der Formel I als «Sealing-smut»-Inhibitor in einer wässrigen Versiegelungs-Lösung zur Versiegelung von anodisch auf Aluminiumoberflächen aufgebrachten Oxidschichten verwendet, liegt die geeignete Menge der Verbindung der Formel I im Bereich von 0.0005 bis 0.5 g/l verwendeter wässriger Versiegelungs-Lösung.

Hinsichtlich der wässrigen Systeme, welche nach der vorliegenden Erfindung behandelt werden können, sind bezüglich der kombinierten Korrosionsschutz- und Kesselsteinverhinderungs-Wirkung die folgenden von besonderem Interesse: Kühlwassersysteme, Dampferzeugungsanlagen, Meerwassersysteme, Dampferzeugungsanlagen, Meerwasser-Verdampfungsanlagen, hydrostatische Kocher, Gaswaschanlagen, geschlossene Heizsysteme, Kühlsysteme auf wässriger Basis und Tiefbohr-Systeme (down-well systems).

Bezüglich der Korrosionsschutzbehandlung allein sind die folgenden wässrigen Systeme von besonderer Bedeutung: Wässrige Flüssigkeitsformulierungen in der maschinellen Bearbeitungstechnik (wie z.B. Bohren, Fräsen, Auftreiben, Nuten ziehen, Ziehen, Drücken auf der Drehbank, Drehen, Schneiden, Sägen, Schleifen, Gewindeschneiden oder in spanloser Umformung bei Zieh- und Walzvorgängen), wässrige Reinigungssysteme, Motoren-Kühlmittel einschliesslich der wässrigen Glycol-Frostschutzsysteme, Wasser/Glycol-Hydraulikflüssigkeiten und Polymer-Oberflächen-Überzugssysteme auf wässriger Basis oder Polymer-Systeme auf Lösungsmittelbasis wie z. B. die, die Tetrahydrofuran, Ketone oder Alkoxyalkanole enthalten.

Die erfindungsgemäss verwendeten Inhibitoren können allein oder zusammen mit andern bei der Behandlung von wässrigen Systemen üblichen Zusätzen verwendet werden.

Bei der Behandlung von ausschliesslich wässrigen Systemen, wie z. B. Kühlwassersystemen, Airconditioning-Systemen, Dampferzeugungsanlagen, Meerwasser-Verdampfungsanlagen, hydrostatischen Kochern und geschlossenen Heizungs- oder Kühlsystemen, können weitere Korrosionsinhibitoren verwendet werden, wie z. B. wasserlösliche Zinksalze, Phosphate, Polyphosphate, Phosphonsäuren und ihre Salze, wie z. B. Acetodiphosphonsäure, Nitrilo-tris-methylenphosphonsäure und Methylamino-dimethylenphosphonocarbonsäuren und ihre Salze wie z. B. in der Deutschen Offenbarungsschrift No. 2 632 774 beschrieben, Hydroxyphosphonoessigsäure, 2-Phosphonobutan-1,2,4-tricarbonsäure und die in der Britischen Patentschrift No. 1 572 406 beschriebenen; Chromate wie z. B. Natriumchromat; Nitrate wie z. B. Natriumnitrat; Nitrite wie z. B. Natriumnitriat; Molybdate wie z. B. Natriummolybdat, Wolframate, Silikate wie z. B. Natriumsilikat, Benztriazol, Bis-benztriazol oder Kupfer passivierende Benztriazol- und Tolutriazolderivate oder deren Mannichbasenderivate; N-Acylsarcosine; N-Acylimino-diessigsäuren, Ethanolamine; Fettamine; Polycarbonsäuren wie z. B. Polymaleinsäure und Polyacrylsäure sowie deren Alkalisalze, Copolymere von Maleinsäureanhydrid wie z. B. Copolymere von Maleinsäureanhydrid und sulfoniertem Styrol, Copolymere der Acrylsäure, wie z. B. Copolymere von Acrylsäure mit hydroxyalkylierter Acrylsäure sowie substituierte Derivate von Polymaleinsäuren und Acrylsäuren und deren Salze. Im weitern können die erfindungsgemäss verwendeten Inhibitoren in solchen auschliesslich wässrigen Systemen zusammen mit weitern Dispergierungs- und/oder Antifällungsmitteln wie z. B. Polyacrylsäure (oder deren Salze), Phosphinopolycarbonsäuren (wie in der Britischen PS 1 458 235 beschrieben), hydrolysiertes Polyacrylnitril, Polymethacrylsäure und deren Salze, Polyacrylamid und dessen Copolymere mit Acryl und Polyacrylsäuren, Ligninsulfonsäuren und deren Salze, Tannin, Naphthalinsulfonsäure/Formaldehyd Kondensationsprodukte, Stärke und Stärkederivate, Cellulose, Acrylsäure/Niederalkyl-hydroxyacrylat-Copolymere wie in er US-Patentschrift No. 4 029 577 beschrieben, Styrol/Maleinsäureanhydrid-Copolymere und Styrolsulfonsäure-Homopolymere wie z. B. in der US Patentschrift 4 374 733 beschrieben und Kombinationen, davon verwendet werden.

Spezifische Antifällungsmittel wie z. B. 2-Phosphonobutan-1,2,4-tricarbonsäure, Acetodiphosphonsäure, hydrolysiertes Polymaleinanhydrid und seine Salze, Alkylphosphonsäuren, Hydroxyphosphonessigsäure, 1-Aminolakyl-1,1-diphosphonsäuren und ihre Salze sowie Alkali-Polyphosphate können ebenso verwendet werden.

Auch Fällungsmittel wie Alkali-Orthophosphate und Carbonate, Sauerstoffänger, wie Alkalisulfite und Hydrazine, Komplexierungsmittel, wie Nitrilotriessigsäure und deren Salze, schaumbrechende Mittel, wie Silikone wie z. B. Polydimethylsiloxane, Distearylsebacamid, Distearyladipamid und ähnliche von Ethylenoxid- und/oder Propylenoxidkondensationen abgeleitete Produkte, Additionsprodukte von Fettalkoholen, wie Caprylalkohole und deren Kondensationsprodukte mit Ethylenoxid, ferner Biocide wie z. B. Amine, quaternäre Ammoniumverbindungen, Chlorphenole, schwefelhaltige Verbindungen, wie Sulfone, Methylen-bis-thiocyanate und -Carbamate, Isothiazolone, Brompropionamide, Triazine, Phosphoniumverbindungen, Chlor und Chlor abgebende Stoffe und Organometallverbindungen wie Tributyl-zinnoxid können zusätzlich eingesetzt werden.

Im Falle des Einsatzes der erfindungsgemässen Behandlung in nicht vollständig wässrigen Systemen, wie z. B. wässrige Flüssigkeiten in der maschinellen Bearbeitungstechnik, kann es sich z. B. um eine mit Wasser verdünnbare Schneide- oder Schleifflüssigkeit handeln.

Bei den erfindungsgemässen wässrigen Flüssigkeiten in der maschinellen Bearbeitungstechnik handelt es sich z. B. um Formulierungen für die Metallbearbeitung. Unter Metallbearbeitung soll Auftreiben, Nuten ziehen, Ziehen, Drücken auf der Drehbank, Schneiden, Schleifen, Bohren, Fräsen, Drehen, Sägen, spanlose Umformung oder Walzen verstanden werden. Beispiele für mit Wasser verdünnbare Schneide- oder Schleifflüssigkeiten, in welche die Korrosionsinhibitor-Zusammensetzung eingearbeitet werden kann sind:

a) Wässrige Konzentrate eines oder mehrerer Korrosionsinhibitoren und gegebenenfalls eines oder mehrerer Verschleissschutzadditive, die in Verdünnungen von 1:50 bis 1:100 üblicherweise als Schleifflüssigkeiten eingesetzt werden.

b) Polyglykole enthaltend Biocide, Korrosionsinhibitoren und Verschleissschutzadditive, welche in Verdünnungen von 1:20 bis 1:40 bei Schneidevorgängen und in Verdünnungen von 1:60 bis 1:80 für Schleifvorgänge eingesetzt werden.

c) Halbsynthetische Schneideflüssigkeiten ähnlich wie unter b), die aber zusätzlich noch 10 bis 25% Öl und genügend Emulgator enthaltend um das mit Wasser verdünnte Produkt halbdurchsichtig zu machen.

d) Ein emulgierbares Mineralölkonzentrat enthaltend z. B. Emulgatoren, Korrosionsinhibitoren, Hochdruck- und Verschleissschutzadditive, Biocide, Schaumbrecher, Kupplungsvermittler und weitere Stoffe, welches im allgemeinen mit Wasser im Verhältnis von 1:10 bis 1:50 verdünnt eine weisse opaleszierende Emulsion ergibt.

e) Ein Produkt ähnlich wie unter d), enthaltend weniger Öl und mehr Emulgator, welches bei einer Verdünnung im Bereich von 1:50 bis 1:100 eine halbdurchsichtige Emulsion für Schneide- und Schleifzwecke ergibt.

Für diese teilweise wässrigen Systeme, worin die wässrige Systemkomponente eine wässrige Flüssigkeitsformulierung zur maschinellen Bearbeitung ist, können die erfindungsgemässen Inhibitoren allein oder zusammen mit andern Additiven wie z. B. weitern bekannten Korrosionsinhibitoren und/oder Hochdruck-Additiven eingesetzt werden.

Beispiele anderer Korrosionsinhibitoren, welche in diesen wässrigen Systemen zusammen mit der erfindungsgemäss eingesetzten Inhibitorzusammensetzung verwendet werden können, sind folgende:

a) Organische Säuren, ihre Ester, Ammonium-Amin-, Alkanolamin- und Metallsalze wie z.B. Benzoesäure, p-tert.-Butyl-benzoesäure, Di-Nasebacat, Triethanolaminlaurat, Isononansäure, Triethanolaminsalz der p-Toluol-sulfonamidocapronsäure, Triethanolaminsalz der Benzol-sulfonamidocapronsäure, Triethanolaminsalze der 5-Ketocarbonsäureabkömmlinge, wie sie in der Europäischen Patentschrift No. 41 927 beschrieben sind, Natrium-N-Lauroyl-sarcosinat oder Nonylphenoxyessigsäure.
b) Stickstoffhaltige Stofe wie die folgenden: Fettsäurealkanolamide, Imidazoline wie z.B. 1-Hydroxy-ethyl-2-oleyl-imidazoline, Oxazoline, Triazole wie z.B. Benztriazole oder deren Mannich-Basen-Derivate, Triethanolamine, Fettamine, anorganische Salze wie z.B. Natriumnitrat, und die in der Europäischen Patentanmeldung No. 46 139 beschriebenen Carboxy-Triazinverbindungen.
c) Phosphorhaltige Stoffe wie die folgenden: Aminphosphate, Phosphonsäuren oder anorganische Salze wie z.B. Na-Dihydrogenphosphat der Zinkphosphat.
d) Schwefelhaltige Verbindungen wie die folgenden: Natrium-, Calcium- oder Barium-Petrolsulfonate, oder heterocyclische Verbindungen wie z.B. Na-Mercaptobenzthiazol.

Stickstoffhaltige Stoffe insbesondere Triethanolamin werden bevorzugt.

Beispiele für Hochdruckadditive, die in den erfindungsgemäss behandelten Systemen verwendet werden können sind Schwefel und/oder Phosphor und/oder Halogen enthaltende Verbindungen wie geschwefeltes Spermöl, geschwefelte Fette, Tritolylphosphat, chlorierte Paraffine oder ethoxylierte Phosphatester.

Wird Triethanolamin in den erfindungsgemäss behandelten Systemen verwendet, so beträgt das Verhältnis der Inhibitorzusammensetzung zu Triethanolamin 2:1 bis 1:20.

Die teilweise wässrigen erfindungsgemäss behandelten Systeme können auch wässrige Oberflächenbeschichtungssysteme sein z.B. sogenannte Primer-Emulsionsfarben und wässrige Pulver-Beschichtungsmittel für metallische Substrate.

Die wässrigen Oberflächenbeschichtungsmittel können z.B. Anstrichfarben sein, wie Styrol/Acryl-Copolymer-Emulsionsfarben, Harze, Latex oder andere polymere Oberflächenbeschichtungsmittel auf wässriger Basis, um ein metallisches Substrat zu beschichten.

Die erfindungsgemäss benutzte Inhibitor-Zusammensetzung kann verwendet werden, um das Schnellrosten des Metallsubstrats während der Auftragung der Oberflächen-Beschichtung und die nachfolgende Korrosion während der Benutzung des beschichteten Metalls zu verhindern.

In den erfindungsgemäss behandelten, wässrigen Oberflächenbeschichtungssystemen kann die Inhibitorzusammensetzung allein oder in Mischung mit andern Additiven wie z.B. bekannten Korrosionsinhibitoren, Biociden, Emulgatoren und/oder Pigmenten verwendet werden.

Als weitere bekannte Korrosionsinhibitoren können z.B. solche der im Vorangehenden unter a), b), c) und d) genannten Art eingesetzt werden.

Als Beispiele von Biociden für derartige wässrige Systeme, die zusammen mit der Verbindung der Formel I eingesetzt werden können, seien genannt: Phenole, alkylierte und halogenierte Phenole, wie z.B. Pentachlorphenol, o-Phenylphenol, o-Phenoxyphenol und chloriertes o-Phenoxyphenol, ferner Salicylanilide, Diamine, Triazine und metallorganische Verbindungen, wie Organoquecksilber- und Organozinn-Verbindungen.

Als Pigmente können in derartigen, wässrigen Systemen zusammen mit der Verbindung der Formel I, z.,B. Titandioxid, Zinkchromat, Eisenoxid und organische Pigmente, wie Phthalocyanine, eingesetzt werden.

Produkte, enthaltend Cotelomere der Formel I, können auch als Dispergiermittel und/oder Antiverstopfungsmittel für gewöhnliche Ablagerungen, wie z.B. Eisenoxide und/oder Eisensalze, Calcium- und Magnesiumablagerungen, wie z.B. deren Carbonate, Sulfate, Oxalate und Phosphate, sowie Schlamm, Tonerde, Silikate und Tone, wie sie in solchen Wässern vorkommen, eingesetzt werden.

Im besonderen kann die erfindungsgemässe Behandlung bei dispersen Ablagerungen in wässrigen Systemen angewendet werden, worin 5 bis 1500 Gewichts-ppm Calciumionen und/oder suspendierte Feststoffe enthalten sind.

Dieser Aspekt der vorliegenden Erfindung findet seine besondere Anwendung in der Porzellanerde-Industrie, wo es wichtig ist, Flüssiggemische zu erhalten, die sich nicht während des Transports von der Tongrube zum Verbraucher entmischen. Bei hohen Konzentrationen an suspendierten Feststoffen in diesen Flüssig-Gemischen wurde gefunden, dass die Cotelomere der Formel I die Porzellanerde dispergieren und wertvolle «in Prozess»-Dispergiermittel und Mahlhilfsmittel darstellen.

Die erfindungsgemässe Behandlung kann auch zur Verhinderung der Bildung von unerwünschten Aluminiumhydroxid-Schichten («Sealing-Smut») beim Versiegeln von anodisch auf Aluminium und dessen Legierungen aufgebrachten Oxidschichten eingesetzt werden.

So kann die Verbindung der Formel I, als «Sealing Smut»-Inhibitor der wässrigen Versiegelungslösung, die zur Versiegelung solcher anodisch auf Aluminium- (oder Aluminiumlegierungs-)oberflächen aufgebrachten Oxidschichten dient, zugesetzt werden. Solche Lösungen haben normalerweise einen pH-Wert von 4 bis 8 und werden bei 90–100 °C eingesetzt.

Beispiel 1:

Cotelomer aus Acrylsäure und 2-Hydroxypropylacrylat im Verhältnis 84.7 : 15.3 mit Natriumhypophosphit im Molverhältnis Monomere : Natriumhypophosphit von 4 : 1.

Eine Lösung von 18.2 g (0.206 Mol) Natriumhypophosphit in 70 g Wasser wird auf 75°C erhitzt. Zu dieser Lösung werden über 2 Stunden gleichzeitig a) eine Lösung von 6.37 g Natriumpersulfat in 109 g Wasser und b) eine Mischung von 54 g (0.75 Mol) Arylsäure und 9.75 g (0.075 Mol) 2-Hydroxypropylacrylat zugegeben. Nach Beendigung der Zugabe wird das Reaktionsgemisch auf 85 °C erhitzt und während 90 Minuten bei dieser Temperatur gehalten. Es werden 263 g einer wasserhellen Lösung mit einem Feststoffgehalt von 32.9% erhalten.

Beispiel 2:

Cotelomer aus Acrylsäure und 2-Hydroxypropylacrylat im Verhältnis 84.7 : 15.3 mit Natriumhypophosphit im Molverhältnis Monomere : Natriumhypophosphit von 16 : 1.

Das Herstellungsverfahren ist analog zu dem in Beispiel 1 mit dem Unterschied, dass 4.54 g (0.0516 Mol) Natriumhypophosphit, an Stelle von 18.2 g, in 52 g Wasser gelöst, eingesetzt wird und das Natriumpersulfat in 100 g Wasser gelöst ist.

Es werden 221 g einer blassgelben Lösung mit einem Feststoffgehalt von 33.1% erhalten.

Beispiel 3:

Cotelomer aus Acrylsäure und 2-Hydroxypropylacrylat im Verhältnis von 62.4 : 37.6 mit Natriumhypophosphit im Molverhältnis Monomere : Natriumhypophosphit von 4 : 1.

Das Herstellungsverfahren von Beispiel 1 wird, unter Einsetzung folgender Edukte, analog angewandt.

17.6 g (0.2 Mol) Natriumhypophosphit gelöst in 100 g Wasser

6.82 g Natriumpersulfat, gelöst in 90 g Wasser

43.2 g (0.6 Mol) Acrylsäure und

26 g (0.2 Mol) 2-Hydroxypropylacrylat.

Beispiel 4:

Cotelomer aus Acrylsäure und 2-Hydroxypropylacrylat im Verhältnis von 62.4 : 37.6 mit Natriumhypophosphit im Molverhältnis Monomere : Natriumhypophosphit von 16 : 1.

Das Herstellungsverfahren von Beispiel 1 wird, unter Einsetzung folgender Edukte, analog angewandt.

4.4 g (0.05 Mol) Natriumhypophosphit, gelöst in 63 g Wasser

6.92 g Natriumpersulfat, gelöst in 100 g Wasser

43.2 g (0.6 Mol) Acrylsäure und

26 g (0.2 Mol) 2-Hydroxypropylacrylat.

Es werden 241 g einer blassgelben Lösung mit einem Feststoffgehalt von 32.8% erhalten.

Beispiel 5:

Cotelomer aus Acrylsäure und Natriumvinylsulfonat im Verhältnis von 35.6 : 64.4 mit Natriumhypophosphit im Molverhältnis Monomere : Natriumhypophosphit von 16 : 1.

Eine Lösung von 5.5 g (0.0625 Mol) Natriumhypophosphit in 100 g Wasser wird zum Rückfluss erhitzt. Zu dieser Lösung werden über 2 Stunden a) eine Lösung von 10.1 g Natriumpersulfat in 100 g Wasser und b) eine Mischung von 36 g (0.5 Mol) Acrylsäure und 188 g (0.5 Mol) einer 35%igen wässrigen Lösung von Natriumvinylsulfonat zugegeben.

Nach Beendigung der Zugabe wird das Reaktionsgemisch während weitern 2 Stunden zum Rückfluss erhitzt. Dann wird die Reaktionsapparatur zum Destillieren umgebaut und die Reaktionslösung eingeengt bis der Feststoffgehalt 51% beträgt.

$^{31}P$-NMR-spektroskopische Analyse zeigt Signale bei 54.3–47.5 tieferem Feld als $H_3PO_4$ (Monomer-P-Monomerbindung).

Beispiel 6:

Cotelomer aus Acrylsäure und N-Acrylamidopropansulfonsäure im Verhältnis 41 : 59 mit Natriumhypophosphit im Molverhältnis Monomere : Natriumhypophosphit von 24 : 1.

Eine Lösung von 2.75 g (0.03125 Mol) Natriumhypophosphit in 100 g Wasser wird zum Rückfluss erhitzt. Zu dieser Lösung werden über 2 Stunden gleichzeitig a) eine Lösung von 6.9 g Natriumpersulfat in 100 g Wasser und b) eine Lösung von 36 g (0.5 Mol) Acrylsäure und 51.75 g (0.25 Mol) Acrylamidopropansulfonsäure in 150 g Wasser zugegeben. Nach Beendigung der Zugabe wird das Reaktionsgemisch während weitern 2 Stunden zum Rückfluss erhitzt. Es werden 444.5 g einer Lösung mit einem Feststoffgehalt von 23.7% erhalten. Die $^{31}P$-NMR-spektroskopische Analyse zeigt Signale bei 54.2 (Monomer-P-Monomerbindung) und bei 36.0 (H-P-Monomerbindung) tieferem Feld als $H_3PO_4$.

Beispiel 7:

Cotelomer aus Acrylsäure und 2-Hydroxyethylacrylat im Verhältnis 86.1 : 13.9 mit Natriumhypophosphit im Molverhältnis Monomere : Natriumhypophosphit von 4 : 1. Eine Lösung von 18.15 g (0.206 Mol) Natriumhypophosphit in 70 g Wasser wird auf 75 °C erhitzt. Zu dieser Lösung wird über 2 Stunden gleichzeitig a) eine Lösung von 6.27 g Natriumpersulfat in 106.9 g Wasser und b) eine Mischung von 54 g (0.75 Mol) Acrylsäure und 8.7 g (0.075 Mol) 2-Hydroxyethylacrylat zugegeben. Nach Beendigung der Zugabe wird die Temperatur auf 85 °C erhöht und während 2 Stunden auf dieser Höhe gehalten. Es werde 260 g einer blassgelben Lösung mit einem Feststoffgehalt von 33% erhalten.

Beispiel 8:

Cotelomer aus Acrylsäure und 2-Hydroxyethylacrylat im Verhältnis 86.1:13.9 mit Natriumhypophosphit im Molverhältnis Monomere:Natriumhypophosphit von 16:1.

Das Herstellungsverfahren ist analog zu dem in Beispiel 7 mit dem Unterschied, dass eine Lösung von 4.54 g (0.0516 Mol) Natriumhypophosphit in 49 g Wasser und eine Lösung von 6.27 g Natriumpersulfat in 100 g Wasser eingesetzt werden.

So werden 221 g einer blassgelben Lösung mit einem Feststoffgehalt von 33.3% erhalten.

Beispiel 9:

Cotelomer aus Acrylsäure und 2-Hydroxyethylacrylat im Verhältnis 65:35 mit Natriumhypophosphit im Molverhältnis Monomere:Natriumhypophosphit von 4:1.

Das Herstellungsverfahren ist analog zu dem in Beispiel 7 mit dem Unterschied, dass eine Lösung von 14.7 g (0.167 Mol) Natriumhypophosphit in 80 g Wasser, 5.53 g Natriumpersulfat in 73.5 g Wasser, 36 g (0.5 Mol) Acrylsäure und 19.37 g (0.167 Mol) 2-Hydroxyethylacrylat eingesetzt werden.

Beispiel 10:

Cotelomer aus Acrylsäure und 2-Hydroxyethylacrylat im Verhältnis 65:35 mit Natriumhypophosphit im Molverhältnis Monomere:Natriumhypophosphit von 16:1.

Das Herstellungsverfahren ist analog zu dem von Beispiel 7 unter Einsetzung der folgenden Edukte:

3.67 g (0.0418 Mol) Natriumhypophosphit gelöst in 40 g Wasser

5.53 g Natriumpersulfat gelöst in 90 g Wasser

36 g (0.5 Mol) Acrylsäure und

19.37 g (0.167 Mol) 2-Hydroxyethylacrylat.

Beispiel 11:

Cotelomer aus Acrylsäure und Acrylamid im Verhältnis von 70:30 mit Natriumhypophosphit im Molverhältnis Monomerz:Natriumhypophosphit von 16:1.

Zu 150 g Wasser unter Rückfluss werden gleichzeitig über 2 Stunden a) eine Lösung von 151.2 g Acrylsäure 64.8 Teile Acrylamid und 16.5 g Natriumhypophosphit in 450 Teilen Wasser und b) eine Lösung von 4.44 g Natriumpersulfat in 450 g Wasser zugegeben. Nach Beendigung der Zugabe wird das Reaktionsgemisch während weitern 2 Stunden zum Rückfluss erhitzt und anschliessend auf Raumtemperatur abgekühlt. Es werden 1137 g einer wasserhellen Lösung mit einem Feststoffgehalt von 19.9% erhalten. Das $^{31}P$-NMR-spektroskopische Analyse zeigt Signale bei 41.2 (Monomer-P-Monomerbindung) und bei 26.1 (H-P-Monomerbindung) tieferem Feld als $H_3PO_4$.

Beispiel 12:

Cotelomer aus Acrylsäure und Acrylamidoglycolsäure im Verhältnis von 83.2:16.8 mit Natriumhypophosphit im Molverhältnis Monomere:Natriumhypophosphit von 16:1.

Zu einer Lösung von 4.54 g Natriumhypophosphit in 50 g Wasser bei 100 °C werden gleichzeitig über 2 Stunden a) eine Lösung von 6.37 g Natriumpersulfat in 100 Teilen Wasser und b) eine Lösung von 10.9 g Acrylamidoglycolsäure in 54 g Acrylsäure zugegeben. Nach Beendigung der Zugabe wird das Reaktionsgemisch während weiteren 2 Stunden zum Rückfluss erhitzt und anschliessend auf Raumtemperatur abgekühlt.

Es werden 221 g einer bernsteinfarbigen Lösung mit einem Feststoffgehalt von 32.7% erhalten. Die $^{31}P$-NMR-spektroskopische Analyse zeigt Signale bei 51.2–48.5 (Monomer-P-Monomerbindung) und bei 31.6–24.8 (H-P-Monomerbindung) tieferem Feld als $H_3PO_4$.

Beispiel 13:

Cotelomer aus Acrylsäure und Styrol im Verhältnis von 87.4:12.6 mit Natriumhypophosphit im Molverhältnis Monomere:Natriumhypophosphit von 16:1.

Das Herstellungsverfahren ist das gleiche wie bei Beispiel 12 mit der Ausnahme, dass die Acrylamidoglycolsäure durch 7.8 g Styrol ersetzt werden. Es werden 219 Teile einer milchigen Dispersion erhalten, die nach Filtration durch einen Glasfrittentrichter (Porosität No. 4) 218 g blassgelbe Lösung mit einem Feststoffgehalt von 32.5% ergeben. Die $^{31}P$-NMR-spektroskopische Analyse zeigt Signale bei 53.2–50.2 (Monomer-p-Monomerbindung) und bei 33.0–30.3 (H-P-Monomerbindung) tieferem Feld als $H_3PO_4$.

Beispiel 14:

Cotelomer aus Acrylsäure und Dimethylmaleat im Verhältnis von 83.3:16.7 mit Natriumhypophosphit im Molverhältnis Monomere:Natriumhypophosphit von 16:1.

Das Herstellungsverfahren ist das gleiche wie bei Beispiel 12 mit der Ausnahme, dass die Acrylamidoglycolsäure durch 10.8 g Dimethylmaleat ersetzt wird.

Es werden 223.4 g einer blassgelben Lösung mit einem Feststoffgehalt von 32.2% erhalten. Die $^{31}P$-NMR-spektroskopische Analyse zeigt Signale bei 53.3–50.2 (Monomer-P-Monomerbindung) und bei 36.5 (H-P-Monomer-Bindung) tieferem Feld als $H_3PO_4$.

Beispiel 15:

Cotelomer aus Acrylsäure und Crotonsäure im Verhältnis von 89.3:10.7 mit Natriumhypophosphit im Molverhältnis Monomere:Natriumhypophosphit von 16:1.

Das Herstellungsverfahren ist das gleiche wie bei Beispiel 12 mit der Ausnahme, dass die Acrylamidoglycolsäure durch 6.45 g Crotonsäure ersetzt wird.

Es werden 218.7 Teile einer wasserhellen Lösung mit einem Feststoffgehalt von 32.1% erhalten. Die $^{31}P$-NMR-spektroskopische Analyse zeigt Signale bei 54.4–48.7 (Monomer-P-Monomerbindung) und bei 27.0 (H-P-Monomerbindung) tieferem Feld als $H_3PO_4$.

Beispiel 16:

Cotelomer aus Acrylsäure und Ethyl-α-hydroxymethylacrylat im Verhältnis von 85.4:14.6 mit Natriumhypophosphit im Molverhältnis Monomere: Natriumhypophosphit von 16:1.

Das Herstellungsverfahren ist das gleiche wie bei Beispiel 12 mit der Ausnahme, dass die Acrylamidoglycolsäure durch 9.25 Teile Etyhl-α-hydroxymethylacrylat ersetzt wird.

Es werden 222.3 g einer klaren Lösung mit einem Feststoffgehalt von 33.0% erhalten. Die $^{31}P$-NMR-spektroskopische Analyse zeigt Signale bei 52.2–49.5 (Monomer-P-Monomerbindung) und bei 27.6-25.7 (H-P-Monomerbindung) tieferem Feld als $H_3PO_4$.

Beispiel 17:

Cotelomer aus Acrylsäure und Methacrylsäure im Verhältnis 89.3:10.7 mit Natriumhypophosphit mit Molverhältnis Monomere: Natriumhypophosphit von 16:1.

Das Herstellungsverfahren ist das gleiche wie bei Beispiel 12 mit der Ausnahme, dass die Acrylamidoglycolsäure durch 5.46 g Methacrylsäure ersetzt wird.

Es werden 218.8 g einer klaren Lösung mit einem Feststoffgehalt von 32.0% erhalten. Die $^{31}P$-NMR-spektroskopische Analyse zeigt Signale bei 51.4–49.8 (Monomer-P-Monomerbindung) und bei 27–25 (H-P-Monomerbindung) tieferem Feld als $H_3PO_4$.

Beispiel 18:

Cotelomer aus Acrylsäure und Vinylacetat im Verhältnis 89.3:10.7 mit Natriumhypophosphit im Molverhältnis Monomere: Natriumhypophosphit von 16:1.

Das Herstellungsverfahren ist das gleiche wie bei Beispiel 12 mit der Ausnahme, dass die Acrylamidoglycolsäure durch 6.45 g Vinylacetat ersetzt wird. Es werden 219.1 g einer Lösung mit einem Feststoffgehalt von 31.6% erhalten. Die $^{31}P$-NMR-spektroskopische Analyse zeigt Signale bei 51–49.9 (Monomer-P-Monomerbindung) und bei 26.7–24.6 (H-P-Monomerbindung) tieferem Feld als $H_3PO_4$.

Beispiel 19:

Cotelomer aus Acrylsäure und Allylalkohol im Verhältnis von 92.5:7.5 mit Natriumhypophosphit im Molverhältnis Monomere: Natriumhypophosphit von 16:1.

Das Herstellungsverfahren ist das gleiche wie in Beispiel 12 mit der Ausnahme, dass die Acrylamidoglycolsäure durch 4.35 g Allylalkohol ersetzt wird. Es werden 215.4 g einer Lösung mit einem Feststoffgehalt von 31.7% erhalten. Die $^{31}P$-NMR-spektroskopische Analyse zeigt Signale bei 54.8–49.8 (Monomer-P-Monomer-Bindung) und bei 26.9 (H-P-Monomer-Bindung) tieferem Feld als $H_3PO_4$.

Beispiel 20:

Cotelomer aus Acrylsäure und Diethylvinylphosphonat im Verhältnis von 81.5:18.5 mit Natriumhypophosphit im Molverhältnis Monomere: Natriumhypophosphit von 16:1.

Das Herstellungsverfahren ist das gleiche wie bei Beispiel 12 mit der Ausnahme, dass die Acrylamidoglycolsäure durch 12.3 g Diethylvinylphosphonat ersetzt wird. Es werden 223.7 g einer Lösung mit einem Feststoffgehalt von 33.7% erhalten. Die $^{31}P$-NMR-spektroskopische Analyse zeigt Signale bei 51.6–50 (Monomer-p-Monomerbindung) und bei 34.5–32.5 (H-P-Monomerbindung) tieferem Feld als $H_3PO_4$.

Beispiel 21:

Cotelomer aus Acrylsäure und N-Hydroxymethylacrylamid im Verhältnis von 87.7:12.3 mit Natriumhypophosphit im Molverhältnis Monomere: Natriumhypophosphit von 16:1.

Das Herstellungsverfahren ist das gleiche wie bei Beispiel 12 mit der Ausnahme, dass die Acrylamidoglycolsäure durch 7.57 g N-Hydroxymethylacrylamid ersetzt wird.

Es werden 209.9 g einer Lösung mit einem Feststoffgehalt von 31.4% erhalten. Die $^{31}P$-NMR-spektroskopische Analyse zeigt Signale bei 50.4–47.7 (Monomer-P-Monomerbindung) und bei 26.5–24.5 (H-P-Monomerbindung) tieferem Feld als $H_3PO_4$.

Beispiel 22:

Cotelomer aus Acrylsäure und Itaconsäure im Verhältnis 84.6:15.4 mit Natriumhypophosphit im Molverhältnis Monomere: Natriumhypophosphit von 16:1.

Das Herstellungsverfahren ist das gleiche wie in Beispiel 12 mit der Ausnahme, dass die Acrylamidoglycolsäure durch 9.8 g Itaconsäure ersetzt wird.

Es werden 218.5 g einer Lösung mit einem Feststoffgehalt von 32.7% erhalten. Die $^{31}P$-NMR-spektroskopische Analyse zeigt Signale bei 50.9–49.5 (Monomer-P-Monomerbindung) und bei 26.0 (H-P-Monomerbindung) tieferem Feld als $H_3PO_4$.

Beispiel 23:

Cotelomer aus Acrylsäure und Natriumvinylsulfonat im Verhältnis von 84.7:15.3 mit Natriumhypophosphit im Molverhältnis Monomere: Natriumhypophosphit 16:1.

Eine Lösung von 4.54 g Natriumhypophosphit in 50 g Wasser wird auf 100°C erhitzt. Zu dieser Lösung werden gleichzeitig über 2 Stunden a) eine Lösung von 6.37 g Natriumpersulfat in 70.7 g Wasser und b) eine Mischung von 54 g Acrylsäure und 39 g einer 25%igen wässrigen Lösung von Natriumvinylsulfonat zugegeben. Nach Beendigung der Zugabe wird das Reaktionsgemisch für weitere 2 Stunden zum Rückfluss erhitzt, dann auf Raumtemperatur abgekühlt und mit 48 g Wasser verdünnt.

Es werden 269.7 g einer Lösung mit einem Feststoffgehalt von 27.3% erhalten. Die $^{31}P$-NMR-spektroskopische Analyse zeigt Signale bei 52.4–49.3 (Monomer-P-Monomerbindung) und bei

27.4–25.4 (H-P-Monomerbindung) tieferem Feld als $H_3PO_4$.

Beispiel 24:

Cotelomer aus Acrylsäure und 3-Buten-1,2,3-tricarbonsäure im Verhältnis von 79.3:20.7 mit Natriumhypophosphit im Molverhältnis Monomere: Natriumhypophosphit von 16:1.

Zu 50 g auf 100°C erhitztem Wasser werden gleichzeitig über 2 Stunden a) eine Lösung von 54.8 g Acrylsäure, 16.9 g 3-Buten-1,2,3-tricarbonsäure und 5.44 g Natriumhypophosphit in 150 g Wasser und b) eine Lösung von 4.1 g Natriumpersulfat in 150 g Wasser zugegeben. Nach Beendigung der Zugabe wird das Reaktionsgemisch für weitere 2 Stunden zum Rückfluss erhitzt und dann auf Raumtemperatur abgekühlt.

Es werden 503.3 g einer wasserhellen Lösung mit einem Feststoffgehalt von 30.2% erhalten. Die $^{31}P$-NMR-spektroskopische Analyse zeigt Signale bei 48.4 ppm und bei 28.3 ppm tieferem Feld als $H_3PO_4$.

Beispiel 25:

Cotelomer aus Acrylsäure und 2-Carboxyethylacrylat im Verhältnis von 75:25 mit Natriumhypophosphit im Molverhältnis Monomere: Natriumhypophosphit von 16:1.

Das Herstellungsverfahren ist das gleiche wie bei Beispiel 24 mit der Ausnahme, dass Lösung a) 60 g Acrylsäure, 20 g 2-Carboxyethylacrylat und 5.3 g Natriumhypophosphit und Lösung b) 1.4 g Natriumpersulfat enthalten. Es werden 399.3 g einer wasserhellen Lösung mit einem Feststoffgehalt von 20.3% erhalten. Die $^{31}P$-NMR-spektroskopische Analyse zeigt Signale bei 46.0 ppm und bei 27.1 ppm tieferem Feld als $H_3PO_4$.

Beispiel 26:

Cotelomer aus Acrylsäure und 3-Sulfopropylacrylsäureester-K-Salz im Verhältnis von 75.6:24.4 mit Natriumhypophosphit im Molverhältnis Monomere: Natriumhypophosphit von 16:1.

Das Herstellungsverfahren ist das gleiche wie bei Beispiel 24 mit der Ausnahme, dass in Lösung a) die 3-Buten-1,2,3-Tricarbonsäure durch 30.9 g 3-Sulfopropylacrylsäureester-K-Salz ersetzt wird und Lösung b) 1.5 g Natriumpersulfat enthält.

Es werden 421.6 einer wasserhellen Lösung mit einem Feststoffgehalt von 21.8% erhalten. Die $^{31}P$-NMR-spektroskopische Analyse zeigt Signale bei 45.5 ppm und 27.2 ppm tieferem Feld als $H_3PO_4$.

Beispiel 27:

Cotelomer aus Acrylsäure und einem Polyethylenglykolester von Methacrylsäure (MW des Polyethylenglykols ist 90) im Verhältnis 81.8:18.2 mit Natriumhypophosphit im Molverhältnis Monomere: Natriumhypophosphit von 16:1.

Das Herstellungsverfahren ist das gleiche wie bei Beispiel 26 mit der Ausnahme, dass das 3-Sulfopropylacrylsäureester-K-Salz durch 14.4 g des Polyethylenglykolmethacrylats ersetzt wird.

Es werden 440.5 g einer wasserhellen Lösung mit einem Feststoffgehalt von 18.7% erhalten. Die $^{31}P$-NMR-spektroskopische Analyse zeigt Signale bei 45.8 ppm und 27.0 ppm tieferem Feld als $H_3PO_4$.

Beispiel 28:

Cotelomer aus Acrylsäure und Acrylamidomethyl-propan-2-sulfonsäure (AMPS-Monomer) im Verhältnis 77.7:22.3 mit Natriumhypophosphit im Molverhältnis Monomere: Natriumhypophosphit von 16:1.

Das Herstellungsverfahren ist das gleiche wie bei Beispiel 26 mit der Ausnahme, dass das 3-Sulfopropylacrylsäureester-K-Salz durch 18.6 g AMPS-Monomer ersetzt wird. Es werden 410.5 g einer wasserhellen Lösung mit einem Feststoffgehalt von 21.8% erhalten. Die $^{31}P$-NMR-spektroskopische Analyse zeigt Signale bei 51.5 ppm und 32.7 ppm tieferem Feld als $H_3PO_4$.

Beispiel 29:

Cotelomer aus Acrylsäure und N-Vinyl-N-methylacetamid im Verhältnis von 87.9:12.1 mit Natriumhypophosphit im Molverhältnis Monomere: Natriumhypophosphit von 16:1. Das Herstellungsverfahren ist das gleiche wie bei Beispiel 26 mit der Ausnahme, dass das 3-Sulfopropylacrylsäureester-K-Salz durch 8.9 g N-Vinyl-N-methylacetamid ersetzt wird.

Es werden 431.2 g einer wasserhellen Lösung mit einem Feststoffgehalt von 17.5% erhalten. Die $^{31}P$-NMR-spektroskopische Analyse zeigt Signale bei 45.8 ppm und bei 27.0 ppm tieferem Feld als $H_3PO_4$.

Beispiel 30:

Cotelomer aus Methacrylsäure und 2-Acrylamido-2-methylpropansulfonsäure im Verhältnis 80.6:19.4 mit Natriumhypophosphit im Molverhältnis Monomere: Natriumhypophosphit von 16:1.

Zu 50 g Wasser unter Rückflussbedingungen werden gleichzeitig über 30 Minuten a) eine Lösung von 77.4 g Methacrylsäure, 18.6 g 2-Acrylamido-2-methylpropansulfonsäure, 5.5 g Natriumhypophosphit und 50 g einer 40%igen wässrigen Natriumhydroxidlösung in 50 g Wasser und b) eine Lösung von 3 g Natriumpersulfat in 10 g Wasser zugegeben. Nach Beendigung der Zugabe wird das Reaktionsgemisch während weitern 2 Stunden zum Rückfluss erhitzt und anschliessend auf Raumtemperatur abgekühlt. Es werden 426.5 g einer wasserhellen Lösung mit einem Feststoffgehalt von 29.5% erhalten. Die $^{31}P$-NMR-spektroskopische Analyse zeigt Signale bei 41.2 ppm und 27.3–32.8 ppm tieferen Feld als $H_3PO_4$.

Beispiele 31 und 32:

Antifällungstest für Calciumcarbonat: NACE-Schwellenwert-Test (NACE: National Association of Corrosion Engineers, GB)

Die folgenden Lösungen a), b), c) und d) werden hergestellt:

a) Calciumnitrat-Lösung:

1.470 g Ca $(NO_3)_2 \cdot 4H_2O$ werden in destilliertem Wasser gelöst, und die Lösung wird auf 1 Liter gebracht.

b) Natriumcarbonat-Lösung

0.646 g $Na_2CO_3$ werden in destilliertem Wasser gelöst, und die Lösung wird auf 1 Liter gebracht.

c) Lösung des Cotelomers aus Acrylsäure und 2-Hydroxypropylacrylat (Produkt aus Beispiel 2)

Eine 0.1%ige Lösung (Gewicht/Volumen) wird mit destilliertem Wasser hergestellt.

d) Lösung des Cotelomers aus Acrylsäure und 2-Hydroxyethylacrylat (Produkt aus Beispiel 8)

Eine 0.1%ige Lösung (Gewicht/Volumen) wird mit destilliertem Wasser hergestellt.

50 ml der Calciumnitrat-Lösung werden in eine 112 ml Glasflasche gefüllt, die mit einem Schraubdeckel versehen ist. Dieser Lösung wird jenes Volumen der Lösungen c) respektive d) hinzugefügt, das erforderlich ist, um die jeweils gewünschte Konzentration der Testsubstanzen im Endvolumen (100 ml) der Testlösungen zu erzeugen. (So ergibt 1.0 ml einer 0.1%igen Lösung der Testsubstanz eine Konzentration von 10 ppm in der Testlösung) 50 ml der Lösung b) werden hinzugegeben, und die Mischung wird geschüttelt. Die Test-Lösung wird dann verschlossen während 24 Stunden in einem Bad bei einer konstanten Temperatur von 25°C gelagert. 25 ml dieser Test-Lösung werden danach entzogen, zwei Kristalle Patton und Reeder's Reagens [3-Hydroxy-4(2-hydroxy-4-sulfo-1-naphthylazo)naphthalin-2-carbonsäure] und zwei Perlen Natriumhydroxid zugegeben und geschüttelt. Die resultierende Lösung wird mit einer 0.01 M Standardlösung des Di-Natriumsalzes von EDTA bis zum vollständigen Farbumschlag von rosa nach blau titriert.

Der Prozentsatz der Verhinderung der Calciumcarbonat-Ausfällung wird nach folgender Gleichung berechnet.

$$\% \text{ Inhibition} = \frac{(\text{Titer} - \text{Blindtiter})}{(7.78 - \text{Blindtiter})} \times 100$$

Der Blindtiter wird aus Testlösungen ohne Zusatz von Kesselstein-Inhibitoren erhalten.

Der maximal mögliche Titrationswert ist 7.78, was 100% Inhibition entspricht.

Die erhaltenen Resultate sind in Tabelle I wiedergegeben.

Tabelle I

| Beispiel | Inhibitor-verbindung | % Inhibition der Ausfällung bei Additiv-Anteil von | |
|---|---|---|---|
| | | 7.5 ppm | 10 ppm |
| 31 | Produkt aus Beispiel 2 | 81.0 | 90.0 |
| 32 | Produkt aus Beispiel 8 | 79.3 | 88.2 |

Beispiele 33 bis 41:

Calciumphosphat-Antiausfällungstest.

Es werden Lösungen von Calciumchlorid (36.76 g/l $CaCl_2 \cdot 2H_2O$) und von Di-Natriumhydrogenphosphat (0.9367 g/l $Na_2HPO_4 \cdot 2H_2O$) mit destilliertem Wasser hergestellt.

Von jedem der Produkte aus den Beispielen 2, 4, 11, 16, 18, 20, 27, 28 und 29 wird eine 0.1%ige Lösung (Gewicht/Volumen) mit destilliertem Wasser hergestellt.

Zu 1800 ml destilliertem Wasser in einem 2 Liter-Messkolben, der vorher mit heisser Chromsäure gereinigt wird, werden 20 ml Calciumchlorid-Lösung und 2 Tropfen konzentrierte Chlorwasserstoffsäure zugegeben. Darauf werden 40 ml Di-Natriumhydrogenphosphat zugefügt, und das Volumen der Mischung wird mit destilliertem Wasser auf 2 Liter gebracht. 100 ml Proben der resultierenden Lösung werden in eine 112 ml Glasflasche, welche mit einem Schraubdeckel versehen ist, gefüllt. Zu diesen Lösungen wird jenes Volumen der Lösungen der jeweiligen Testsubstanzen zugefügt, das erforderlich ist, die jeweils gewünschte Konzentration der Testsubstanzen im Endvolumen (100 ml) der Testlösung zu erzeugen. (So ergibt 1.0 ml einer 0.1%ige Lösung der Testsubstanz eine Konzentration von 10 ppm in der Testlösung). Der pH-Wert der gewünschten Lösung wird auf 8.0 gebracht und die Flasche verschlossen und in einem Wasserbad bei 60°C während 24 Stunden gelagert. Die Proben werden dann herausgenommen und im heissen Zustand durch 0.22 Mikron-Filter filtriert. Das Filtrat wird auf 20°C abgekühlt, der pH-Wert gemessen und der Phosphatgehalt nach der folgenden spektroskopischen Methode bestimmt.

Die folgenden Lösungen werden hergestellt.

A: Ammoniummolybdat-Lösung

25 g Ammoniummolybdat werden in 175 ml destilliertem Wasser gelöst. 280 ml konzentrierte Schwefelsäure (Dichte 1.84) werden vorsichtig, unter Kühlung und Rühren, zu 400 ml destilliertem Wasser gegeben. Nach dem Abkühlen wird die Molybdat-Lösung zugefügt und das Ganze mit destilliertem Wasser auf 1000 ml verdünnt.

B: Zinnchlorid-Lösung

2.5 g Zinnchlorid ($SnCl_2 \cdot 2H_2O$ p.a.) werden in 100 ml (126 g) Glycerin gelöst.

Eine Eichkurve wird hergestellt, die die Phosphatkonzentration (im Bereich von 6 ppm bis 1 ppm) von 6 Verdünnungen der Di-Natriumhydrogenphosphatlösung angibt.

Die spektrophotometrische Bestimmung des Phosphatgehaltes wird wie folgt vorgenommen:

2.5 ml Proben der verdünnten Stammlösungen (für die Eichkurve) oder der Filtrate (aus dem oben beschriebenen Verfahren) werden in 50 ml Messkolben übergeführt, die 40 ml destilliertes Wasser und 2 ml Ammoniummolybdat-Lösung enthalten, und das Ganze wird gut gemischt. Zum Schluss werden 5 Tropfen der Zinnchlorid-Lösung zugegeben, auf total 50 ml aufgefüllt und die Mischung gut geschüttelt. Eine Kontrollprobe

wird auf gleiche Weise, aber ohne Zugabe von Phosphat, hergestellt.

Während mindestens 4 Minuten wird die blaue Farbe sich entwickeln gelassen, dann wird die optische Dichte (OD) bei 690 nm in einer 4-cm-Küvette gemessen. Der Wert der Kontrollprobe wird vom Wert der Versuchsproben jeweils abgezogen. Zur Eichung wird eine Kurve mit $PO_4^{3-}$ in ppm (auf der x-Achse) gegen OD (auf der y-Achse aufgetragen. Der Phosphatgehalt des Filtrats wird bestimmt, indem der der gemessenen O.D. entsprechende Gehalt an $PO_4^{3-}$ in ppm direkt aus der Eichkurve abgelesen und mit dem Faktor 2 multipliziert wird.

Die Inhibition der Calciumphosphat-Ausfällung in % (I) wird nach folgender Gleichung berechnet.

$$I = \frac{x - y}{10 - y} \times 100$$

worin x der $PO_4^{3-}$-Gehalt in ppm des Filtrates und y der $PO_4^{3-}$-Gehalt in ppm des phosphatfreien Kontrollfiltrates bedeuten.

Die Resultate sind in Tabelle II wiedergegeben.

Tabelle II

| Beispiel | Inhibitor-verbindung | % Inhibition bei Additiv-Anteil von 10 ppm |
|---|---|---|
| 33 | Produkt aus Beispiel 2 | 81 |
| 34 | Produkt aus Beispiel 4 | 100 |
| 35 | Produkt aus Beispiel 11 | 81 |
| 36 | Produkt aus Beispiel 16 | 100 |
| 37 | Produkt aus Beispiel 18 | 88 |
| 38 | Produkt aus Beispiel 20 | 100 |
| 39 | Produkt aus Beispiel 27 | 97 |
| 40 | Produkt aus Beispiel 28 | 93 |
| 41 | Produkt aus Beispiel 29 | 100 |

Beispiele 42 bis 47: Dispergierungsvermögenstest gegenüber vorausgefälltem Calciumphosphat

Eine Calciumphosphatsuspension wird hergestellt, indem eine Mischung von 18.42 g $CaCl_2 \cdot 6H_2O$ und 32.20 g $Na_3PO_4 \cdot 12H_2O$ in 16 Litern Wasser ab Hahn (Manchester GB) bei 40°C während 2 Tagen in Umlauf gehalten wird. Der pH-Wert dieser hergestellten Suspension beträgt 9.5-10,0 und der Calciumphosphat-Ausfällungsgehalt beträgt 558 ppm als Hydroxyapatit (darin ist der ursprüngliche Calciumgehalt des Manchester-Wassers und die zugefügte Calciummenge eingerechnet).

100 ml der obigen Suspension werden entnommen und der pH-Wert mit 1 M Chlorwasserstoffsäure auf 8.0 eingestellt.

Eine 0.1%ige Lösung (Gewicht/Volumen) wird von jeder Testsubstanz in destilliertem Wasser hergestellt und 1.0 ml Proben dieser Lösungen werden in 100 ml der sich in einer Glasflasche mit Schraubverschluss befindlichen obigen Suspension überführt, was darin eine Additivkonzentration von 10 ppm ergibt. Die optische Dichte dieser Testlösung wird unmittelbar darauf in einer 4-cm-Glasküvette bei einer Wellenlänge von 420 nm gegen destilliertes Wasser gemessen (Zeitpunkt = 0).

Dann wird die Suspension unter möglichst grosser Ruhe sich setzen gelassen, worauf die optische Dichte erneut nach 90 und 120 Minuten gemessen wird (Zeitpunkt = x).

Der Calciumgehalt ($Ca^{2+}$) beträgt 222.3 mg/l (Darin eingerechnet sowohl der im Manchester-Wasser bereits vorhandene Calciumanteil wie auch der zugegebene Calciumanteil) und der Phosphatgehalt ($PO_4^{3-}$) beträgt 503.1 mg/l.

Der Prozentsatz an Sedimentationsinhibition I wird nach folgender Gleichung berechnet.

$$I = \frac{\text{optische Dichte der Probe beim Zeitpunkt (x)} \times 100}{\text{optische Dichte der Probe beim Zeitpunkt (0)}}$$

worin x = 90 Minuten oder 120 Minuten bedeuten.

Die Resultate sind in Tabelle III wiedergegeben.

Tabelle III

| Beispiel | Inhibitor-verbindung | % Inhibition der Sedimentation I | |
|---|---|---|---|
| | | 90 Min. | 120 Min. |
| Kontrolle | | 10 | 8 |
| 42 | Produkt aus Beispiel 2 | 94 | 89 |
| 43 | Produkt aus Beispiel 11 | 86 | 79 |
| 44 | Produkt aus Beispiel 26 | 81 | 72 |
| 45 | Produkt aus Beispiel 27 | 84 | 75 |
| 46 | Produkt aus Beispiel 29 | 92 | 86 |
| 47 | Produkt aus Beispiel 30 | 92 | 86 |

**Patentansprüche**

1. Cotelomer-Verbindungen der Formel I

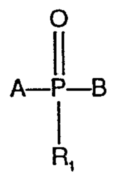 (I)

und deren Salze, worin A ein statistischer Polymerrest, enthaltend mindestens einen Rest der Formel II

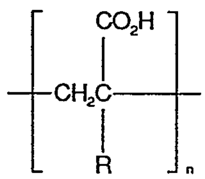 (II)

und mindestens einen vom Rest der Formel II verschiedenen Rest der Formel III

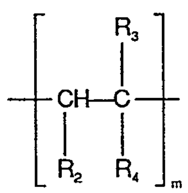 (III)

und B Wasserstoff oder ein Rest A ist; und worin m und n ganze Zahlen sind, mit der Summe von m und n eine ganze Zahl von 3-100 und das Verhältnis n:m im Bereich von 99:1 bis 1:99, so dass die resultierenden Telomere wasserlöslich sind und worin m und/oder n in einem Rest A gleich oder verschieden von m und/oder n in einem Rest B sein können; R ist Wasserstoff, Methyl oder Ethyl, $R_1$ ist ein Rest -OX, worin X Wasserstoff, ein Alkali- oder ein Erdalkalimetall, Ammonium oder ein Aminrest ist, $R_2$ ist Wasserstoff, Methyl oder ein Rest $-CO_2R_5$, worin $R_5$ Wasserstoff oder geradkettiges oder verzweigtes $C_1$-$C_8$-Alkyl ist, das gegebenenfalls durch eine Hydroxylgruppe substituiert sein kann, $R_3$ ist Wasserstoff, geradkettiges oder verzweigtes $C_1$-$C_4$-Alkyl, Hydroxymethyl oder ein Rest $-CO_2R_6$, worin $R_6$ Wasserstoff, ein Rest der Formel

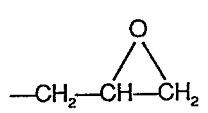

ein Rest der Formel $-[CH_2-CH(R_9)O]_zH$, worin $R_9$ Wasserstoff, Methyl oder Phenyl und z eine ganze Zahl von 1-20 ist, oder geradkettiges oder verzweigtes $C_1$-$C_8$-Alkyl ist, welches gegebenenfalls durch Hydroxy oder eine $SO_3M$-Gruppe, worin M Wasserstoff oder ein Alkali- oder Erdalkalimetallatom ist, substituiert sein kann, $R_4$ ist ein Rest $-CO_2R_6$, worin $R_6$ die vorbeschriebene Bedeutung hat, geradkettiges oder verzweigtes $C_1$-$C_8$-Alkyl, das gegebenenfalls durch eine oder zwei Carboxylgruppen substituiert sein kann, Phenyl, Acetyl, Hydroxymethyl, Acetomethyl, $-SO_3M$, $-CH_2SO_3M$ oder $-PO_3M_2$, worin M Wasserstoff, ein Alkali- oder Erdalkalimetallatom ist, ein Rest $-CONR_7R_8$, worin $R_7$ und $R_8$ gleich oder verschieden Wasserstoff, geradkettiges oder verzweigtes $C_1$-$C_8$-Alkyl, Hydroxymethyl oder ein Rest $-CH(OH)CO_2M$, $-C(CH_3)_2CH_2SO_3M$ oder $-C(CH_3)_2$-$CH_2$ $PO_3M_2$ (mit M in der vorbeschriebenen Bedeutung) sind, oder ein Rest $-N(R_{10})COCH_3$, worin $R_{10}$ Wasserstoff oder geradkettiges oder verzweigtes $C_1$-$C_4$-Alkyl ist.

2. Verbindungen der Formel I gemäss Anspruch 1, worin R Wasserstoff ist.

3. Verbindungen der Formel I gemäss Anspruch 1, worin B ein Rest A, wie in Anspruch 1 definiert, ist.

4. Verbindungen der Formel I gemäss Anspruch 1, worin $R_1$ ein Rest der Formel OM ist, worin M die in Anspruch 1 definierte Bedeutung hat.

5. Verbindungen der Formel I gemäss Anspruch 2, worin $R_2$ Wasserstoff oder ein Rest $-COOR_5$ ist, worin $R_5$ Wasserstoff oder $C_1$-$C_8$-Alkyl ist; $R_3$ Wasserstoff oder $COOR_6$ ist, worin $R_6$ die in Anspruch 1 definierte Bedeutung hat, und $R_4$ ein Rest $-COOR_6$ ist, worin $R_6$ Wasserstoff oder $C_1$-$C_4$-Alkyl ist, das gegebenenfalls durch eine Hydroxylgruppe substituiert sein kann, oder $R_4$ $C_1$-$C_8$-Alkyl, das gegebenenfalls durch eine oder zwei Carboxylgruppen substituiert sein kann, Phenyl, Acetomethyl, $-SO_3M$ oder $-PO_3M_2$ (mit M in der in Anspruch 1 definierten Bedeutung), $CONR_7R_8$, worin $R_7$ und $R_8$ die in Anspruch 1 definierte Bedeutung haben, sowie $-N(R_{10})COCH_3$ ist, worin $R_{10}$ die in Anspruch 1 definierte Bedeutung hat, und die Summe von m und n 3 bis 32 beträgt.

6. Verfahren zur Herstellung der cotelomeren Verbindungen der Formel I, enthaltend die Umsetzung von n Molen einer Säure der Formel IV

$$CH_2 = CR\text{-}CO_2H \qquad (IV),$$

m Molen einer Verbindung der Formel V

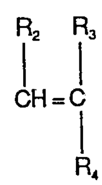 (V)

worin $R_2$, $R_3$, $R_4$, m und n die in Anspruch 1 beschriebene Bedeutung haben, mit einem Mol einer Verbindung der Formel VI

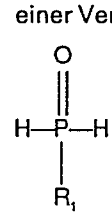 (VI)

worin $R_1$ die in Anspruch 1 beschriebene Bedeutung hat.

7. Verfahren zur Behandlung von vollständig oder teilweise wässrigen Systemen, die mit Metalloberflächen in Kontakt stehen, um die Kesselsteinablagerung auf diesen Metalloberflächen und/oder die Korrosion dieser Metalloberflächen zu verhindern und/oder die Dispergierung von Partikeln in diesen wässrigen Systemen zu verbessern und/oder die Ablagerung von Sealing-Smut aus diesen wässrigen Systemen zu verhindern, indem zum wässrigen System eine funktionell wirksame Menge der cotelomeren Verbindung der Formel I, wie in Anspruch 1 definiert, oder eines Salzes davon zugesetzt wird.

8. Verfahren gemäss Anspruch 7, worin R Wasserstoff ist.

9. Verfahren gemäss Anspruch 7, worin der Rest B der Verbindung der Formel I ein Rest A, wie in Anspruch 1 definiert, ist.

10. Verfahren gemäss Anspruch 7, worin $R_1$ ein Rest der Formel -OM ist, worin M die in Anspruch 1 definierte Bedeutung hat.

11. Verfahren gemäss Anspruch 7, worin das erhitzte wässrige System nur eine korrosionsverhindernde Behandlung benötigt und eine Verbindung der Formel I in einer Menge von 0.1 bis 50000 ppm zugesetzt wird.

12. Verfahren gemäss Anspruch 11, worin die Menge der zugesetzten Verbindung der Formel I 1 bis 500 ppm beträgt.

13. Verfahren gemäss Anspruch 7, worin das wässrige System nur gegen Kesselsteinablagerung behandelt wird und die Menge der zugesetzten Verbindung der Formel I 1 bis 2000 ppm beträgt.

14. Verfahren gemäss Anspruch 13, worin die Menge der zugesetzten Verbindung der Formel I 1 bis 30 ppm beträgt.

15. Verfahren gemäss Anspruch 7, worin das wässrige System aus einer verdünnten Dispersion besteht und die Menge der als Dispergiermittel zugesetzten Verbindung der Formel I 1 bis 200 ppm beträgt.

16. Verfahren gemäss Anspruch 15, worin die Menge der zugesetzten Verbindung der Formel I 2 bis 20 ppm beträgt.

17. Verfahren gemäss Anspruch 7, worin das wässrige System zur Versiegelung einer anodisch auf Aluminiumoberflächen aufgebrachten Oxidschicht verwendet wird und als Sealing-Smut-Inhibitor 0.0005 bis 0.5 g/l einer Verbindung der Formel I enthält.

## Claims

1. Cotelomer compounds of formula I

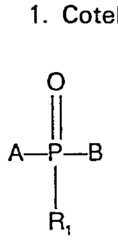

(I)

and salts thereof wherein A is a random polymeric radical containing at least one radical of formula II

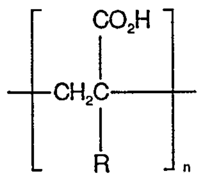

(II)

and at least one radical of formula III which is different from the radical of formula II,

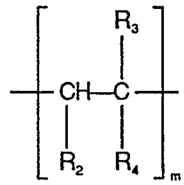

(III)

and B is hydrogen or a radical A; and wherein m and n are integers, the sum of m and n being an integer of from 3 to 100, the ratio of n:m being from 99:1 to 1:99, so that the resulting telomers are water-soluble and wherein m and/or n in a radical A may be the same as or different from m and/or n in a radical B; R is hydrogen, methyl, or ethyl; $R_1$ is a radical -OX, wherein X is hydrogen, an alkali metal or alkaline earth metal, ammonium or an amine radical; $R_2$ is hydrogen, methyl or a radical $-CO_2R_5$, wherein $R_5$ is hydrogen or straight-chain or branched $C_1$-$C_8$alkyl which may be optionally substituted by hydroxyl group; $R_3$ is hydrogen, straight-chain or branched $C_1$-$C_4$alkyl, hydroxymethyl or a radical $-CO_2R_6$, wherein $R_6$ is hydrogen, a radical of formula

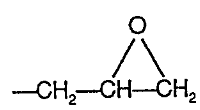

a radical of formula $-[CH_2-CH(R9)O]_zH$, wherein $R_9$ is hydrogen, methyl or phenyl and z is an integer from 1 to 20, or $R_6$ is straight-chain or branched $C_1$-$C_8$alkyl which may be optionally substituted by hydroxyl or by a group $SO_3M$ in which M is hydrogen or an alkali metal atom or alkaline earth metal atom; $R_4$ is a radical $-CO_2R_6$ wherein $R_6$ has its previously described significance, straight-chain or branched $C_1$-$C_8$alkyl which may be optionally substituted by one or two carboxyl groups, or $R_4$ is phenyl, acetyl, hydroxymethyl, acetomethyl, $-SO_3M$, $-CH_2SO_3M$ or $-PO_3M_2$, wherein M is hydrogen, an alkali metal atom or alkaline earth metal atom, a radical $-CONR_7R_8$, wherein $R_7$ and $R_8$ are the same or different and are hydrogen, straight-chain or branched $C_1$-$C_8$alkyl, hydroxymethyl or a radical $-CH(OH)CO_2M$, $-C(CH_3)_2CH_2SO_3M$ or $-C(CH_3)_2CH_2PO_3M_2$, (M having its previously described significance), or a radical $-N(R_{10})COCH_3$, wherein $R_{10}$ is hydrogen or straight-chain or branched $C_1$-$C_4$alkyl.

2. Compounds of formula I according to claim 1, wherein R is hydrogen.

3. Compounds of formula I according to claim 1, wherein B is a radical A as defined in claim 1.

4. Compounds of formula I according to claim I, wherein $R_1$ is a radical of formula OM, wherein M is as defined in claim 1.

5. Compounds of formula I according to claim 2, wherein $R_2$ is hydrogen or a radical $-COOR_5$ wherein $R_5$ is hydrogen or $C_1$–$C_8$alkyl; $R_3$ is hydrogen or $COOR_6$ wherein $R_6$ is as defined in claim 1; and $R_4$ is a radical $-COOR_6$ wherein $R_6$ is hydrogen or $C_1$–$C_4$alykl which may be optionally substituted by a hydroxyl group, or $R_4$ is $C_1$–$C_8$alkyl which may be optionally substituted by one or two carboxyl groups, or is phenyl, acetomethyl, $-SO_3M$ or $-PO_3M_2$ (M being as defined in claim 1), $CONR_7R_8$ wherein $R_7$ and $R_8$ are as defined in claim 1 or $-N(R_{10})COCH_3$ wherein $R_{10}$ is as defined in claim 1; $R_1$ is as defined in claim 1; and the sum of m and n is from 3 to 32.

6. Process for the production of cotelomer compounds of formula I comprising reacting n moles of an acid of formula IV

$$CH_2=CR-CO_2H \quad (IV),$$

m moles of a compound of formula V

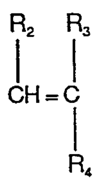 (V)

wherein $R_2$, $R_3$, $R_4$, m and n are as defined in claim 1, and one mole of a compound of formula VI

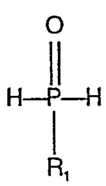 (VI)

wherein $R_1$ is as defined in claim 1.

7. Method of treating a wholly or partly aqueous system, in contact with metal surfaces, in order to inhibit scale formation on these metal surfaces and/or to inhibit corrosion of these metal surfaces and/or to facilitate dispersion of particulate matter in this aqueous system and/or inhibit sealing smut deposition from this aqueous system, comprising adding to the aqueous system a functionally-effective amount of a cotelomer compound of formula I, as defined in claim 1, or a salt thereof.

8. Method according to claim 7, wherein R is hydrogen.

9. Method according to claim 7, wherein the radical B in the compound or formula I is a radical A as defined in claim 1.

10. Method according to claim 7, wherein $R_1$ is a radical of formula -OM, wherein M is as defined in claim 1.

11. Method according to claim 7, wherein the aqueous system heated requires only corrosion-inhibiting treatment and a compound of formula I is added in an amount of 0.1 to 50000 ppm.

12. Method according to claim 11, wherein the amount of the compound of formula I added is 1 to 500 ppm.

13. Method according to claim 7, wherein the aqueous system is only treated against scale formation and the amount of the compound of formula I added is 1 to 200 ppm.

14. Method according to claim 13, wherein the amount of the compound of formula I added is to 30 ppm.

15. Method according to claim 7, wherein the aqueous system is a dilute dispersion and the amount of the compound of formula I added, as dispersant, is 1 to 200 ppm.

16. Method according to claim 15, wherein the amount of the compound of formula I added is 2 to 20 ppm.

17. Method according to claim 7, wherein the aqueous system is used to seal an anodically produced oxide layer on an aluminium surface and contains, as sealing smut inhibitor, 0.0005 to 0.5 g/l of a compound of formula I.

**Revendications**

1. Cotélomères de formule I:

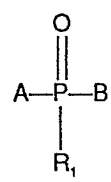 (I)

et leurs sels, où A représente un reste polymère statistique, contenant au moins un reste de formule II:

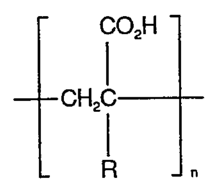 (II)

et au moins un reste de formule III, différant du reste de formule II:

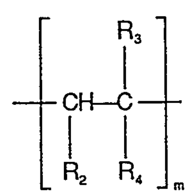 (III)

et B représente un atome d'hydrogène ou un reste A; et m et n sont des nombres entiers, la somme (m + n) étant un nombre entier valant 3 à 100, et le rapport n:m se situant entre 99:1 et 1:99, de sorte que les télomères résultants sont hydrosolubles, et m et/ou n d'un reste A pouvant être égaux ou différents de m et/ou n d'un reste B; R

représente un atome d'hydrogène ou un groupe méthyle ou éthyle, $R_1$ représente un reste -OX, où X représente un atome d'hydrogène, un métal alcalin ou alcalino-terreux, un groupe ammonium ou un reste amine; $R_2$ représente un atome d'hydrogène, un groupe méthyle ou un reste $-CO_2R_5$, où $R_5$ est un atome d'hydrogène ou un groupe alkyle, linéaire ou ramifié, en $C_1$ à $C_8$, qui peut éventuellement être substitué par un groupe hydroxyle; $R_3$ représente un atome d'hydrogène, un groupe alkyle en $C_1$ à $C_4$, linéaire ou ramifié, hydroxyméthyle ou un reste $-CO_2R_6$, où $R_6$ représente un atome d'hydrogène, un reste de formule:

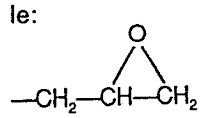

un reste de formule $-[CH_2-CH(R_9)O]_zH$, où $R_9$ représente un atome d'hydrogène, un groupe phényle ou méthyle, et z est un nombre entier valant 1 à 20, ou un groupe alkyle en $C_1$ à $C_8$, linéaire ou ramifié, qui peut éventuellement être substitué par un groupe hydroxy ou par un groupe $SO_3M$, M étant un atome d'hydrogène ou un atome de métal alcalin ou alcalino-terreux, $R_4$ représente un reste $-CO_2R_6$, dans lequel $R_6$ a le sens précité, ou est un groupe alkyle en $C_1$ à $C_8$, linéaire ou ramifié, qui peut éventuellement être substitué par un ou deux groupes carboxyles, ou est un groupe phényle, acétyle, hydroxyméthyle, acétométhyle, $-SO_3M$, $-CH_2SO_3M$ ou $-PO_3M_2$, où M est un atome d'hydrogène, un atome de métal alcalin ou alcalino-terreux, un reste $-CONR_7R_8$, où $R_7$ et $R_8$, identiques ou différents, représentent chacun un atome d'hydrogène, un groupe alkyle en $C_1$ à $C_8$, linéaire ou ramifié, un groupe hydroxyméthyle, ou un reste $-CH(OH)CO_2M$, $-C(CH_3)_2CH_2SO_3M$ ou $-C(CH_3)_2CH_2PO_3M_2$ (M ayant le sens précité), ou un reste $-N(R_{10})COCH_3$, où $R_{10}$ représente un atome d'hydrogène ou un groupe alkyle en $C_1$ à $C_4$, linéaire ou ramifié.

2. Composés de formule I selon la revendication 1, dans lesquels R représente un atome d'hydrogène.

3. Composés de formule I selon la revendication 1, dans lequels B représente un reste A, comme défini à la revendication 1.

4. Composés de formule I selon la revendication 1, dans lesquels $R_1$ représente un reste de formule OM, dans laquelle M a le sens défini à la revendication 1.

5. Composés de formule I selon la revendication 2, dans lesquels $R_2$ représente un atome d'hydrogène ou un reste $-COOR_5$, dans lequel $R_5$ représente un atome d'hydrogène ou un groupe alkyle en $C_1$ à $C_8$; $R_3$ représente un atome d'hydrogène ou un groupe $-COOR_6$, dans lequel $R_6$ a le sens défini à la revendication 1, et $R_4$ représente un reste $-COOR_6$, dans lequel $R_6$ représente un atome d'hydrogène ou un groupe alkyle en $C_1$ à $C_4$, qui peut éventuellement être substitué par un groupe hydroxyle, ou bien $R_4$ représente un groupe alkyle en $C_1$ à $C_8$ (qui peut éventuellement être substitué par un ou deux groupes carboxyles), un groupe phényle, acétométhyle, $-SO_3M$ ou $-PO_3M_2$ (M ayant le sens défini à la revendication 1), $CONR_7R_8$ ($R_7$ et $R_8$ ayant le sens défini à la revendication 1), ainsi que $-N(R_{10})COCH_3$, où $R_{10}$ a le sens défini à la revendication 1, $R_1$ a le sens défini à la revendication 1 et la somme m + n vaut de 3 à 32.

6. Procédé pour préparer des cotélomères de formule I, comprenant la réaction de n moles d'un acide de formule IV:

$$CH_2 = CR-CO_2H \quad \text{(IV)},$$

m moles d'un composé de formule V:

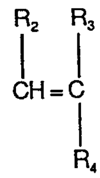

(V)

(dans laquelle $R_2$, $R_3$, $R_4$, m et n ont le sens décrit à la revendication 1), avec 1 mole d'un composé de formule VI:

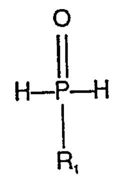

(VI)

dans laquelle $R_1$ a le sens décrit à la revendication 1.

7. Procédé pour traiter des systèmes entièrement ou partiellement aqueux, qui sont au contact de surfaces métalliques, pour empêcher le dépôt de tartre sur ces surfaces métalliques et/ou la corrosion de ces surfaces métalliques et/ou pour améliorer la dispersion de particules dans ces systèmes aqueux et/ou pour empêcher le dépôt de «Sealing-Smut» (Boues de colmatage) à partir de ces systèmes aqueux, procédé selon lequel on ajoute au système aqueux une quantité fonctionnellement active du cotélomère de formule I, selon la définition donnée à la revendication 1, ou un sel de ce cotélomère.

8. Procédé selon la revendication 7, dans lequel R représente un atome d'hydrogène.

9. Procédé selon la revendication 7, dans lequel le reste B du composé de formule I est un reste A, selon la définition donnée à la revendication 1.

10. Procédé selon la revendication 7, dans lequel $R_1$ représente un reste de formule -OM, dans laquelle M a le sens défini à la revendication 1.

11. Procédé selon la revendication 7, dans lequel le système aqueux chauffé ne nécessite qu'un traitement pour empêcher une corrosion et l'on ajoute à ce système un composé de formule I, introduit en une quantité de 0,1 à 50000 ppm.

12. Procédé selon la revendication 11, dans lequel la quantité du composé de formule I que l'on ajoute va de 1 à 500 ppm.

13. Procédé selon la revendication 7, dans lequel le système aqueux n'est traité que pour empêcher un dépôt de tartre, et la quantité du composé de formule I que l'on ajoute va de 1 à 200 ppm.

14. Procédé selon la revendication 13, dans lequel la quantité du composé de formule I que l'on ajoute va de 1 à 30 ppm.

15. Procédé selon la revendication 7, dans lequel le système aqueux consiste en une dispersion diluée, et la quantité du composé de formule I que l'on ajoute comme dispersant va de 1 à 200 ppm.

16. Procédé selon la revendication 15, dans lequel la quantité du composé de formule I que l'on ajoute va de 2 à 20 ppm.

17. Procédé selon la revendication 7, dans lequel le système aqueux sert à boucher une couche d'oxyde appliquée par voie anodique sur des surfaces en aluminium et contient, comme inhibiteur de «Sealing-Smut» (Boues à rôle d'obturation) 0,0005 à 0,5 g/l, d'un composé de formule I.